# EUROPÄISCHE PATENTSCHRIFT

(11) **EP 4 460 433 B1**
(45) Veröffentlichungstag und Bekanntmachung des Hinweises auf die Patenterteilung: **31.12.2025**
(21) Anmeldenummer: 23720295.7
(22) Anmeldetag: 19.04.2023
(51) Int. Cl.: B60L 3/00, B60L 3/12, B60L 58/21, B60L 58/22, G01R 31/396, H01M 10/42, H01M 10/48, H02J 7/00, H02J 9/00

(54) **VERFAHREN ZUM BETREIBEN EINES HOCHVOLT-ENERGIESPEICHERS, HOCHVOLT-ENERGIESPEICHER SOWIE KRAFTFAHRZEUG**
METHOD FOR OPERATING A HIGH-VOLTAGE ENERGY STORAGE DEVICE, HIGH-VOLTAGE ENERGY STORAGE DEVICE AND VEHICLE
PROCÉDÉ DE FONCTIONNEMENT D'UN ACCUMULATEUR D'ÉNERGIE ÉLECTRIQUE À HAUTE TENSION, ACCUMULATEUR D'ÉNERGIE ÉLECTRIQUE ÄÀ HAUTE TENSION ET VÉHICULE

(30) Priorität: 02.05.2022 DE 102022001530
(43) Veröffentlichungstag der Anmeldung: 13.11.2024
(73) Patentinhaber: Mercedes-Benz Group AG, 70372 Stuttgart (DE)
(72) Erfinder: SCHMIDT, Jan Philipp, 95473 Creußen (DE); HUST, Friedrich Emanuel, 73734 Esslingen (DE); SPAETH, Thomas, 73266 Bissingen (DE)
(74) Vertreter: Novagraaf Group
(86) Internationale Anmeldenummer: PCT/EP2023/060197
(87) Internationale Veröffentlichungsnummer: WO 2023/213546

(56) Entgegenhaltungen:
- WO-A1-2021/188987
- DE-A1- 102014 207 395
- DE-A1- 102016 224 492
- US-A1- 2013 106 429
- US-A1- 2019 299 810

## Beschreibung

Die Erfindung betrifft ein Verfahren zum Betreiben eines Hochvolt-Energiespeichers gemäß dem Patentanspruch 1. Ferner betrifft die Erfindung einen Hochvolt-Energiespeicher gemäß dem Patentanspruch 6.

Schließlich betrifft die Erfindung ein Kraftfahrzeug gemäß dem Patentanspruch 9.

Zum Antreiben von Kraftfahrzeugen werden immer mehr elektrische Antriebsstränge verwendet, welche durch einen Hochvolt-Energiespeicher mit elektrischer Energie versorgt werden. Solch ein Hochvolt-Energiespeicher umfasst mehrere Batteriezellen, welche zusammengeschaltet werden und somit eine entsprechend benötigte Spannung und/oder Stromstärke bereitstellen können. Um solch einen Hochvolt-Energiespeicher, welcher insbesondere als Traktionsbatterie ausgebildet ist, sicher betreiben zu können, ist ein Batteriemanagementsystem beziehungsweise ein Battery Main Controller, also ein Hauptsteuergerät, vorhanden, welches beispielsweise das Laden und Entladen der Batterie steuert beziehungsweise regelt. Ferner werden durch das Hauptsteuergerät in Kombination mit Zellüberwachungselektronik zumindest Teile der Batteriezellen überwacht.

In der Regel sind dazu die Zellüberwachungselektroniken in Serie miteinander verbunden und bilden eine Kette, im Englischen die sogenannte Daisy Chain. Kommt es zu einem Kommunikationsausfall zwischen Hauptsteuergerät und der Zellüberwachungselektronik beispielsweise aufgrund einer Kontaktunterbrechung oder bei einer kabellosen Verbindung beispielsweise durch einen äußeren Störsender, wie beispielsweise einen Jammer, kann der Hochvolt-Energiespeicher nicht weiterbetrieben werden, da durch das Hauptsteuergerät nicht sichergestellt werden kann, dass zu hohe Temperaturen und/oder Spannungen sicher vermieden werden können.

Die CN 110 520 742 A zeigt ein mehrkanaliges bidirektionales Batteriemanagementsystem. Ferner zeigt die US 10 128 546 B2 ein Batteriekommunikationssystem für Batteriepacks.

Die DE 10 2016 224 492 A1 zeigt ein Verfahren zum Betreiben eines Batteriesystems, insbesondere für ein Kraftfahrzeug mit Elektroantrieb, mit einer Traktionsbatterie, einer Batterie-Managementvorrichtung und einer oder mehreren Zellenüberwachungseinheiten, die jeweils Zellenspannungen einer Anzahl von Batteriezellen einer Zellenanordnung überwachen, wobei beim Feststellen eines Fehlers in einer der Zellenüberwachungseinheiten eine Fehlerbetriebsart der Traktionsbatterie eingenommen wird.

Schließlich zeigt die WO 2021/188 987 A1 ein Batteriemanagementsystem mit einer Vielzahl von Batterien, die jeweils einen positiven Anschluss und einen negativen Anschluss umfassen, wobei der positive oder negative Anschluss jeder der Vielzahl von Batterien mit dem positiven oder negativen Anschluss einer anderen der Vielzahl von Batterien gekoppelt ist, und mit einer Überwachungsplatine, die mit dem positiven Anschluss und dem negativen Anschluss von mindestens einer der Vielzahl von Batterien verbunden ist.

Darüber hinaus befinden sich bereits elektrisch angetriebene Fahrzeuge auf dem Markt, wo eine Kommunikation über CAN gelöst ist und parallel dazu eine Hardware-Reißleine als Extraleitung angelegt ist.

Dabei ist beim Stand der Technik beispielsweise nachteilig, dass zusätzlicher Hardwareaufwand betrieben werden muss, um einen sicheren Betrieb eines Hochvolt-Energiespeichers zu gewährleisten. Ferner werden im Falle einer primären kabellosen Kommunikation beispielsweise durch die Hardwaremodifikation die Vorteile der kabellosen Kommunikation aufgehoben und die Lösung ad absurdum geführt. Möglichkeiten wie eine vollwertige Powerline-Kommunikation als Rückfallebene wären besonders kostenintensiv.

Aufgabe der vorliegenden Erfindung ist es, ein Verfahren, einen Hochvolt-Energiespeicher sowie ein Kraftfahrzeug bereitzustellen, bei welchem eine Kommunikationsverbindung zwischen Hauptsteuergerät und Zellüberwachungselektronik besonders vorteilhaft ausgebildet werden kann.

Diese Aufgabe wird erfindungsgemäß durch die Gegenstände der unabhängigen Patentansprüche gelöst. Vorteilhafte Ausgestaltungen und Weiterbildungen der Erfindung sind in den abhängigen Patentansprüchen sowie in der Beschreibung und in der Zeichnung angegeben.

Ein erster Aspekt der Erfindung betrifft ein Verfahren zum Betreiben eines Hochvolt-Energiespeichers, welcher ein Hauptsteuergerät und mehrere miteinander verschaltete Batteriezellen umfasst. Die Batteriezellen sind über zumindest eine Leitung mit dem Hauptsteuergerät verbunden und zumindest ein Teil der Batteriezellen ist mit einer jeweiligen Zellüberwachungseinrichtung verbunden, welche jeweils dazu ausgebildet ist, wenigstens einen jeweiligen den Zustand der Batteriezelle charakterisierenden Zellparameter zu erfassen beziehungsweise zu bestimmen und diesen über eine Kommunikationsverbindung, welche beispielsweise kabelgebunden und/oder drahtlos ausgebildet sein kann, dem Hauptsteuergerät zu senden.

Das Hauptsteuergerät ist insbesondere dazu ausgebildet, eine Batteriespannung, also in der Regel eine Gesamtspannung, aller miteinander verschalteter Batteriezellen zu messen, wozu diese über die Leitung mit dem Hauptsteuergerät verbunden sind.

Damit nun der Hochvolt-Energiespeicher besonders vorteilhaft betrieben werden kann und beispielsweise eine Schädigung aufgrund des Ausfalls der Kommunikationsverbindung vermieden werden kann, umfasst das erfindungsgemäße Verfahren mehrere Schritte.

In einem ersten Schritt erfolgt ein Erfassen der Kommunikationsverbindung zwischen Hauptsteuergerät und der jeweiligen Zellüberwachungseinrichtung. In einem zweiten Schritt des Verfahrens erfolgt eine Modulation einer Last durch wenigstens eine der Zellüberwachungseinrichtung an wenigstens der mit ihr verbundenen Batteriezelle bei einem Ausbleiben des Sendens des Zellparameters und/oder eines auf das Senden folgenden Bestätigung, sodass eine Batteriespannung moduliert wird. Mit anderen Worten wird zusätzlich zu einer Einzelspannung der Batteriezelle eine Frequenz durch die Zellüberwachungseinrichtung erzeugt, welche über die Batteriespannung moduliert wird. In einem dritten Schritt erfolgt ein Erfassen der Modulation durch eine Spannungsmessung des Hauptsteuergeräts an der Leitung, wobei die Modulation auf die Batteriespannung aufgebracht ist. In einem vierten Schritt erfolgt in Abhängigkeit von der Art der Modulation ein Vorgeben eines Betriebszustands der Batterie durch das Hauptsteuergerät.

Mit anderen Worten wird eine sowieso in dem Hochvolt-Energiespeicher vorhandene physikalische Verbindung, die Leitung, als Leitung für ein Signal, welches durch die Modulation erzeugt wird, verwendet, wodurch eine im Stand der Technik nicht bekannte Kommunikation zwischen Hauptsteuergerät und der jeweiligen Zellüberwachungseinrichtung durchgeführt werden kann. So wird die Batteriespannung in der Regel direkt vom Hauptsteuergerät gemessen. Erfindungsgemäß wird durch die Modulation der Last an den Zellen beziehungsweise Batteriezellen durch die Zellüberwachungselektronik die Batteriespannung moduliert. So kann beim Ausfall der regulären Kommunikation durch die Kommunikationsverbindung von der Zellüberwachungselektronik ein Signal aufmoduliert werden, welches insbesondere den Zustand der Batteriezelle beziehungsweise den Zellparameter, eines Batteriemoduls oder der Batterie beschreibt. So kann in Abhängigkeit von dem Zustand und somit der Art der Modulation ein insbesondere sicherer Betrieb des Hochvolt-Energiespeichers durch Vorgeben des Betriebszustands ermöglicht werden. Die modulierende Zellüberwachungseinrichtung wechselt somit in einen Herzschlagmodus, da es bildlich gesprochen ein Lebenszeichen der jeweiligen Zelle durch die Modulation, welches als Herzschlag interpretiert werden kann, aussendet.

Die Kommunikationsverbindung ist insbesondere jeweils zwischen der jeweiligen Zellüberwachungseinrichtung und dem Hauptsteuergerät ausgebildet, kann aber auch in Form eines Netzes zwischen den Zellüberwachungseinrichtungen selbst und/oder zwischen eine Zellüberwachungseinrichtung in Kombination mit dem Hauptsteuergerät ausgebildet sein.

Dabei ist ein Vorteil des erfindungsgemäßen Verfahrens, dass zumindest ein zeitlich befristeter Betrieb des Hochvolt-Energiespeichers trotz Ausfall der Kommunikationsverbindung, aufgrund der Möglichkeit der redundanten Kommunikation über die Leitung, ermöglicht wird. Handelt es sich bei dem Hochvolt-Energiespeicher beispielsweise um eine Traktionsbatterie eines Kraftfahrzeugs, kann ein Liegenbleiben des Kraftfahrzeugs verhindert werden. Ein weiterer Vorteil ist, dass keine zusätzliche Hardware, insbesondere Leitungen, verbaut werden müssen. Dadurch ergibt sich der Vorteil, dass der Hochvolt-Energiespeicher beispielsweise besonders leicht und/oder bauteilarm und somit insbesondere ausfallsicher ausgebildet werden kann. Darüber hinaus können Kosten gespart werden.

Erfindungsgemäß erfolgt die Modulation, indem ein Ausgleichen, ein sogenanntes Balancing, der wenigstens einen Batteriezelle mit einer vorgegebenen Frequenz ein- und ausgeschaltet wird. Mit anderen Worten wird das Balancing zumindest einer Zelle an die Überwachungselektronik beziehungsweise die Zellüberwachungselektronik durch ein insbesondere vordefiniertes Ein- und Ausschalten mit vorgegebenen Frequenzen ermöglicht. Bei dem Balancing werden normalerweise unterschiedliche Kapazitäten der einzelnen Batteriezellen beziehungsweise maximal mögliche Spannungen angeglichen, wobei das Balancing in der Regel in dem Hauptsteuergerät durchgeführt wird. Durch das Ausgleichen mittels der jeweiligen Zellüberwachungseinrichtung, wobei mehr als eine Batteriezelle gemeinsam ausgeglichen werden können, ergibt sich der Vorteil, dass das Verfahren besonders batterieschonend durchgeführt werden kann.

In vorteilhafter Ausgestaltung der Erfindung erfolgt die Modulation in Abhängigkeit von dem Zustand der Batteriezelle beziehungsweise dem Zellparameter. Mit anderen Worten wird durch die Zellüberwachungseinrichtung der Zellparameter ermittelt, welcher den Zustand der Batteriezelle charakterisiert. Der Zellparameter kann beispielsweise eine Batteriespannung, eine Temperatur der Batteriezelle, eine Zellkapazität, einen Ladezustand, eine Stromentnahme, eine Restbetriebszeit, einen Ladezyklus und so weiter charakterisieren. Dabei kann nun die Modulation in Abhängigkeit von dem ermittelten Zellparameter erfolgen, das heißt, dass beispielsweise die Frequenz der Modulation abhängig von der Temperatur sein kann. Dadurch ergibt sich der Vorteil, dass auf besonders vorteilhafte Weise der vorgebare beziehungsweise vorgegebene Batteriezustand im vierten Schritt des Verfahrens ermittelt beziehungsweise bestimmt werden kann.

In weiterer vorteilhafter Ausgestaltung der Erfindung wird bei dem Erfassen der Modulation eine Phasenregelschleife verwendet. Mit anderen Worten kann insbesondere bei kleinen Auslenkungen, also einer relativ kleinen Modulation im Vergleich zur gesamten Batteriespannung, durch einen im Englischen Phase-Locked-Loop genannten Regelkreis die Modulation erkannt beziehungsweise detektiert werden. Dadurch ergibt sich der Vorteil, dass die Modulation im Vergleich zum Gesamtsignal, welches auf der Leitung durch das Hauptsteuergerät erfasst wird, gering beziehungsweise besonders differenziert ausgebildet sein kann. Dadurch kann beispielsweise eine besonders hohe Anzahl unterschiedlicher Zellzustände beziehungsweise unterschiedlicher Batteriezellen übertragen und/oder durch das Hauptsteuergerät erfasst werden.

In weiterer vorteilhafter Ausgestaltung der Erfindung wird während der Modulation der Last ein Blockausgleich durchgeführt. Mit anderen Worten werden mehrere Batteriezellen zu Blöcken zusammengefasst und diese gemeinsam gebalanced beziehungsweise ausgleichend belastet. Dabei ergibt sich der Vorteil, dass auf besonders vorteilhafte Weise ein Ausfall der Kommunikationsverbindung kompensiert werden kann, insbesondere, wenn beispielsweise nur jede zweite Batteriezelle eine Zellüberwachungseinrichtung aufweist beziehungsweise eine Zellüberwachungseinrichtung für mehrere Batteriezellen zuständig ist.

In weiterer vorteilhafter Ausgestaltung der Erfindung wird als der Betriebszustand ein Abschalten beziehungsweise Ausschalten, ein Betrieb ohne Laden, also ein Zustand in welchem das Laden der Batterie nicht ermöglicht ist, und ein uneingeschränkter Betrieb und/oder ein Betrieb mit geringer Entladeleistung vorgegeben. Dabei kann dies jeweils in Abhängigkeit von der Art der Modulation sein, beispielsweise ist die Frequenz so moduliert, dass sie eine Zellspannung einer Batteriezelle von mehr als 4,2 Volt oder weniger als 2,4 Volt beschreibt, dann wird der Betrieb nicht weitergeführt. Bei einer Frequenz der Modulation, welche beispielsweise eine Zellspannung zwischen 4,0 und 4,2 Volt charakterisiert und somit kurz vor dem oberen Spannungsende, wird ein eingeschränkter Betrieb ermöglicht, bei welchem der Hochvolt-Energiespeicher jedoch nicht geladen werden kann. Im Falle dass die Frequenz der Modulation beispielsweise eine Zellspannung zwischen 3 und 4 Volt charakterisiert, ist ein Betrieb ohne Einschränkung möglich. Schließlich ist für eine Frequenz, welche eine Zellspannung zwischen 3,0 und 2,4 Volt beschreibt, und somit die Batteriezelle kurz vor dem unteren Spannungsende steht, einen Betrieb nur mit geringer Entladeleistung ermöglicht. Dadurch ergibt sich der Vorteil, dass der Hochvolt-Energiespeicher besonders vorteilhaft betrieben werden kann, sodass beispielsweise seine Lebensdauer besonders groß gestaltet werden kann.

Ein zweiter Aspekt der Erfindung betrifft einen Hochvolt-Energiespeicher, welcher dazu ausgebildet ist, ein Verfahren nach dem ersten Aspekt der Erfindung durchzuführen.

Dabei sind Vorteile und vorteilhafte Ausgestaltungen des ersten Aspekts der Erfindung als Vorteile und vorteilhafte Ausgestaltungen des zweiten Aspekts der Erfindung anzusehen und umgekehrt.

In vorteilhafter Ausgestaltung der Erfindung ist der Hochvolt-Energiespeicher als Traktionsbatterie für ein Kraftfahrzeug ausgebildet. Mit anderen Worten handelt es sich bei den zusammengeschalteten Batteriezellen um die Energieversorgung eines elektrisch antreibbaren Kraftfahrzeugs. Dadurch ergibt sich der Vorteil, dass der Hochvolt-Energiespeicher besonders vorteilhaft zum Betreiben eines Kraftfahrzeugs verwendet werden kann, da ein Liegenbleiben des Kraftfahrzeugs vermieden werden kann.

In weiterer vorteilhafter Ausgestaltung der Erfindung weist ein Hauptsteuergerät einen Lock-In-Verstärker auf, welcher zum Erfassen einer Modulation einer Batteriespannung ausgebildet ist. Mit anderen Worten umfasst das Hauptsteuergerät einen phasenempfindlichen Gleichrichter, welcher ein Verstärker zum Messen eines schwachen elektrischen Wechselsignals, welches mit einer Frequenz und Phase eines bekannten Referenzsignals moduliert ist, darstellt, wodurch auf besonders vorteilhafte Weise die Modulation erfasst werden kann. Daher ergibt sich der Vorteil, dass der Hochvolt-Energiespeicher ein Verfahren gemäß dem ersten Aspekt der Erfindung besonders vorteilhaft durchgeführt werden kann. Ferner ergibt sich als Vorteil, dass der Hochvolt-Energiespeicher besonders langlebig ausgebildet werden kann.

Ein dritter Aspekt der Erfindung betrifft ein Kraftfahrzeug umfassend einen Hochvolt-Energiespeicher gemäß dem zweiten Aspekt der Erfindung und/oder welches dazu ausgebildet ist, ein Verfahren gemäß dem ersten Aspekt der Erfindung durchzuführen.

Dabei sind Vorteile und vorteilhafte Ausgestaltungen des ersten und zweiten Aspekts der Erfindung als Vorteile und vorteilhafte Ausgestaltungen des dritten Aspekts der Erfindung anzusehen und umgekehrt.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigt:
- Fig. 1: eine schematische Ansicht eines Hochvolt-Energiespeichers mit einem Hauptsteuergerät, mehreren Batteriezellen und einer Zellüberwachungseinrichtung in einem ersten Zustand;
- Fig. 2: eine schematische Ansicht des Hochvolt-Energiespeichers der Fig. 1 in einem zweiten Zustand;
- Fig. 3: ein schematisches Diagramm einer Modulation einer Last wenigstens einer der Batteriezellen des Hochvolt-Energiespeichers gemäß den Fig. 1 und 2.

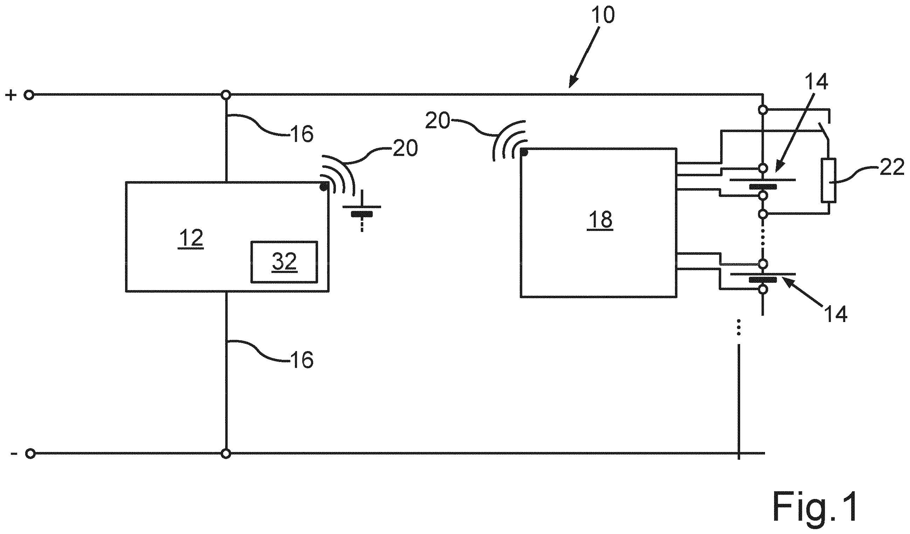

Fig. 1 zeigt eine schematische Ansicht eines Hochvolt-Energiespeichers 10, welcher ein Hauptsteuergerät 12 und mehrere miteinander verschaltete Batteriezellen 14 aufweist. Die Batteriezellen 14 sind beispielsweise in Reihe geschaltet und erzielen so die Batteriespannung, also die Summenspannung, des gesamten Hochvolt-Energiespeichers 10. Die Batteriezellen 14 sind zumindest über eine Leitung 16 mit dem Hauptsteuergerät 12 verbunden und zumindest ein Teil der Batteriezellen 14 ist ferner mit einer jeweiligen Zellüberwachungseinrichtung 18 verbunden, welche jeweils dazu ausgebildet ist, wenigstens einen jeweiligen Zustand der Batteriezelle 14 charakterisierenden Zellparameter zu erfassen beziehungsweise zu bestimmen und diesen über eine Kommunikationsverbindung 20 an das Hauptsteuergerät 12 zu senden.

Kommt es zu einem Ausfall der Kommunikationsverbindung 20, die im Ausführungsbeispiel kabellos ausgebildet ist, kann eine Verbindung zum Hauptgerät 12 (Englischen "battery main controller", kurz BMC) nicht mehr stattfinden, wodurch das Hauptsteuergerät 12 nicht sicherstellen kann, dass ein Betriebsparameter, beispielsweise ein Temperaturbereich der Batteriezellen 14, in einem Intervall liegt, welcher einen Sicheren Betrieb des Hochvolt-Energiespeichers 10 zulässt, daher muss der Betrieb des Hochvolt-Energiespeichers 10 eingestellt werden. Um dem vorteilhaft entgegenzuwirken und eine Redundanz der Kommunikation zwischen der wenigstens einen Zellüberwachungseinrichtung 18 und dem Hauptsteuergerät 12 auch bei einem Ausfall der Kommunikationsverbindung 20 zu ermöglichen, wird ein Verfahren, der Hochvolt-Energiespeicher 10, welcher sich zum Durchführen des Verfahrens eignet, vorgestellt.

Das Verfahren weist mehrere, folgende Schritte auf:

So kommt es in einem ersten Schritt zu einem Erfassen der Kommunikation, insbesondere über die Kommunikationsverbindung 20, zwischen dem Hauptsteuergerät 12 und der jeweiligen Zellüberwachungseinrichtung 18. Für den zweiten Schritt erfolgt, bei einem Ausbleiben des Sendens des Zellparameters und/oder einer auf das Senden folgenden Bestätigung durch das Hauptsteuergerät 12, eine Modulation einer Last durch wenigstens eine der Zellüberwachungseinrichtung 18 an wenigstens der mit ihr verbundenen Batteriezelle 14, wobei somit die gesamte Batteriespannung des Hochvolt-Energiespeichers 10 moduliert werden kann. Anschließend erfolgt in einem dritten Schritt ein Erfassen der Modulation durch eine Spannungsmessung des Hauptsteuergeräts 12 beziehungsweise durch das Hauptsteuergerät 12 an der Leitung 16, wobei die Modulation auf der Batteriespannung aufmoduliert ist. Schließlich erfolgt in einem vierten Schritt in Abhängigkeit von der Art der Modulation ein Vorgeben eines Betriebszustands des Hochvolt-Energiespeichers 10 durch das Hauptsteuergerät 12.

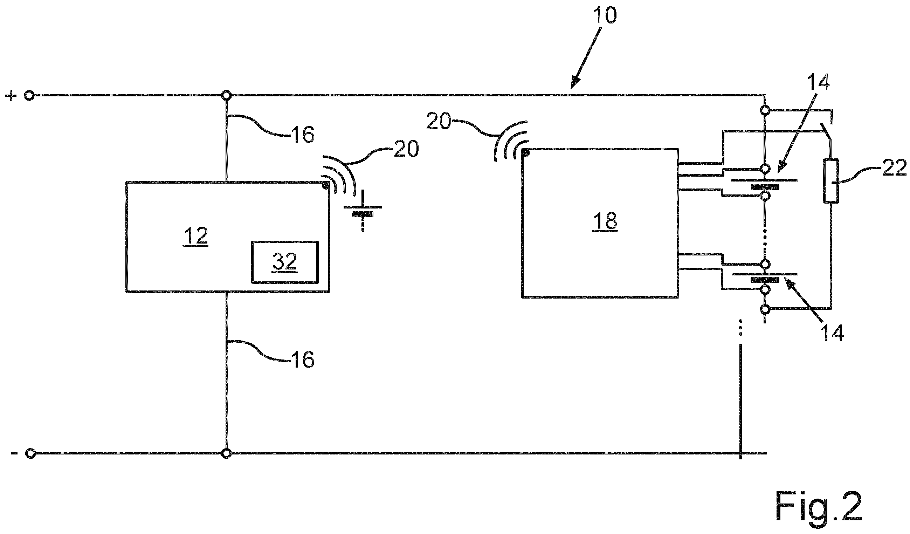

Die Modulation erfolgt indem ein Ausgleich (Balancing) der wenigstens einen Batteriezelle 14 in einer vorgegebenen Frequenz ein- und ausgeschaltet wird. Dazu zeigen die Fig. 1 und 2 eine Balancing-Vorrichtung 22, wobei diese insbesondere als passive Balancing-Vorrichtung 22 ausgebildet sein kann. Dabei kann, wie der Unterschied zwischen den Fig. 1 und 2 zeigt, die Balancing-Vorrichtung 22 nur für eine Batteriezelle 14 oder für mehrere Batteriezellen 14 geschaltet werden. So kann bei weiterer vorteilhafter Ausgestaltung des Verfahrens beziehungsweise des Hochvolt-Energiespeichers 10 während der Modulation der Last ein Blockausgleich, ein sogenanntes Block-Balancing, durchgeführt werden, wofür ein Balancing-Modul gebildet werden kann.

Durch das Verfahren beziehungsweise bei der Modulation kann somit eine Zellspannung, eine Modulspannung oder eine Strangspannung je nach Orientierung und zusammenfassend der Batteriezellen 14 moduliert werden. Das Hauptsteuergerät 12 detektiert das Signal der Modulation insbesondere als IO-Signal. Dabei kann das Signal durch ein Phase-Locked-Loop ausgebildet beziehungsweise erfasst werden. Vorteilhafterweise kann eine Umsetzung des Block-Balancing in Kombination mit einer elektrochemischen Impedanzspektroskopie (EIS) durchgeführt werden.

Durch den Hochvolt-Energiespeicher 10 und das beschriebene Verfahren kann dem Problem entgegengetreten werden, welches durch den Ausfall eines Kommunikationskanals zwischen Zellüberwachungselektronik und BMC auftritt. So kann trotz des Ausfalls eine Detektion eines sicherheitskritischen Zustands der verschalteten Batteriezellen 14, beispielsweise in Hinblick auf Überspannung oder Übertemperatur, durch das Hauptsteuergerät 12 aufrechterhalten werden, sodass ein Betrieb des Hochvolt-Energiespeichers 10 nicht eingestellt werden muss.

Detektiert eine Zellüberwachungselektronik, dass keine Kommunikation zum Hauptsteuergerät 12 möglich ist, wechselt es in einen Herzschlagmodus. Dabei wird beispielsweise das Balancing der Batteriezellen 14 an der entsprechenden Zellüberwachungseinrichtung 18 in einer vordefinierten Frequenz ein- und ausgeschaltet. Dies kann über die Spannungsmessung durch das Hauptsteuergeräts 12 gemessen werden, da die Spannungsschwankungen durch das Balancing relativ gering sind und festdefinierte Frequenzen identifiziert werden sollen, wird vorteilhafterweise ein Lock-In-Verstärker 32 verwendet, welcher Teil des Hochvolt-Energiespeichers 10 und insbesondere des Hauptsteuergeräts 12 ist.

So kann vorteilhafterweise trotz Ausfall des Primärkommunikationskanals, der Kommunikationsverbindung 20, zumindest ein kurzfristiger Weiterbetrieb ermöglicht werden. Wobei vorteilhafterweise keine zusätzlichen Kosten für eine Verkabelung und/oder beispielsweise einen aufwändigen OFDM-Transceiver, wie aus der einer Powerline-Kommunikation bekannt, anfallen.

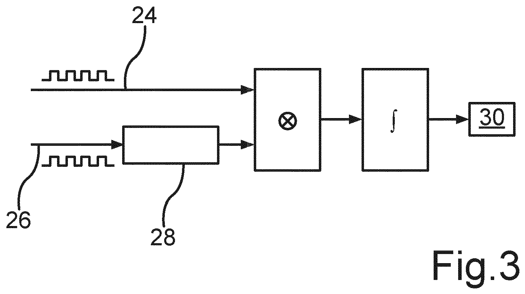

Die Modulation ist schematisch in Fig. 3 gezeigt, wobei die Batteriespannung 24 mit einem Referenzsignal 26 beaufschlagt wird, welches durch einen Phasenschieber 28 gesendet wird und als das Herzschlagsignal 30, beispielsweise von dem Hauptsteuergerät 12, erfassbar ist.

Dabei erfolgen die Modulation und insbesondere das Design des Referenzsignals 26 beziehungsweise dessen Frequenz in Abhängigkeit von dem Zustand der Batteriezelle 14 beziehungsweise von dem Zellparameter, so kann der Zellparameter beispielsweise eine Temperatur und/oder eine Spannung und/oder einen Ladezustand und dergleichen umfassen.

Ferner kann als der Betriebszustand ein Abschalten, ein Betrieb ohne Lade, ein uneingeschränkter Betrieb und/oder ein Betrieb mit geringer Entladeleistung vorgegeben werden.

Vorteilhafterweise kann es sich bei dem Hochvolt-Energiespeicher 10 um eine Traktionsbatterie für ein Kraftfahrzeug handeln. Somit sei hier ferner ein Kraftfahrzeug vorgestellt, welches einen entsprechenden Hochvolt-Energiespeicher 10 umfasst beziehungsweise ein hier vorgestelltes Verfahren durchführen kann.

Es wird hier eine Lösung für den Ausfall einer Kommunikationsverbindung 20 vorgeschlagen, bei welcher ein bestehender Kanal beziehungsweise eine physikalische Verbindung, in Form der Leitung 16, für ein sogenanntes Alive-Signal als ein Lebenszeichen verwendet werden kann. Dazu wird die Batteriespannung, auch genannt Link-Spannung, von dem Hauptsteuergerät 12 gemessen, und dabei eine Modulation einer Last wenigstens einer der Batteriezelle 14 durch die Zellüberwachungseinrichtung 18 erfasst. So ist ein Verfahren und Einrichtung für einen Redundanten Kommunikationspfad für eine Zellüberwachungselektronik gezeigt.

## Patentansprüche

1. Verfahren zum Betreiben eines Hochvolt-Energiespeichers (10), welcher ein Hauptsteuergerät (12) und mehrere miteinander verschaltete Batteriezellen (14) umfasst, welche über zumindest eine Leitung (16) mit dem Hauptsteuergerät (12) verbunden sind und von welchen zumindest ein Teil mit einer jeweiligen Zellüberwachungseinrichtung (18) verbunden ist, welche jeweils dazu ausgebildet ist, wenigstens einen jeweiligen den Zustand der Batteriezelle (14) charakterisierenden Zellparameter zu erfassen und diesen über eine Kommunikationsverbindung (20) dem Hauptsteuergerät (12) zu senden, mit den Schritten:
- Erfassen der Kommunikation zwischen Hauptsteuergerät (12) und der jeweiligen Zellüberwachungseinrichtung (18); **gekennzeichnet durch** die Schritte:
- Modulation einer Last durch wenigstens eine der Zellüberwachungseinrichtungen (18) an wenigstens der mit ihr verbundenen Batteriezelle (14) bei einem Ausbleiben des Sendens des Zellparameters und/oder einer auf das Senden folgenden Bestätigung, sodass eine Batteriespannung moduliert wird, wobei die Modulation erfolgt indem ein Ausgleichen der wenigstens einen Batteriezelle (14) mit zumindest einer anderen Batteriezelle (14) mit einer vorgegebenen Frequenz ein und ausgeschaltet wird;
- Erfassen der Modulation durch eine Spannungsmessung des Hauptsteuergeräts (12) an der Leitung (16); und
- Vorgeben eines Betriebszustands des Hochvolt-Energiespeichers (10) durch das Hauptsteuergerät (12) in Abhängigkeit von der Art der Modulation.

2. Verfahren nach Anspruch 1,
**dadurch gekennzeichnet, dass**
die Modulation in Abhängigkeit von dem Zustand der Batteriezelle (14) beziehungsweise dem Zellparameter erfolgt.

3. Verfahren nach einem der vorhergehenden Ansprüche,
**dadurch gekennzeichnet, dass**
bei dem Erfassen der Modulation eine Phasenregelschleife verwendet wird.

4. Verfahren nach einem der vorhergehenden Ansprüche,
**dadurch gekennzeichnet, dass**
während der Modulation der Last ein Blockausgleich durchgeführt wird.

5. Verfahren nach einem der vorhergehenden Ansprüche,
**dadurch gekennzeichnet, dass**
als der Betriebszustand ein Abschalten, ein Betrieb ohne Laden, ein uneingeschränkter Betrieb und/oder ein Betrieb mit geringer Entladeleistung vorgegeben wird.

6. Hochvolt-Energiespeicher (10), aufweisend ein Hauptsteuergerät (12) und mehrere miteinander verschaltete Batteriezellen (14), welche über zumindest eine Leitung (16) mit dem Hauptsteuergerät (12) verbunden sind und von welchen zumindest ein Teil mit einer jeweiligen Zellüberwachungseinrichtung (18) verbunden ist, welche jeweils dazu ausgebildet ist, wenigstens einen jeweiligen den Zustand der Batteriezelle (14) charakterisierenden Zellparameter zu erfassen und diesen über eine Kommunikationsverbindung (20) dem Hauptsteuergerät (12) zu senden, wobei der Hochvolt-Energiespeicher (10) **dadurch gekennzeichnet ist, dass** er dazu ausgebildet ist, ein Verfahren nach
einem der vorhergehenden Ansprüche durchzuführen.

7. Hochvolt-Energiespeicher (10) nach Anspruch 6,
**dadurch gekennzeichnet**, das
der Hochvolt-Energiespeicher (10) als Traktionsbatterie für ein Kraftfahrzeug ausgebildet ist.

8. Hochvolt-Energiespeicher (10) nach Anspruch 6 oder 7,
**dadurch gekennzeichnet**, das
ein Hauptsteuergerät (12) einen Lock-in-Verstärker aufweist, welcher zum Erfassen einer Modulation einer Batteriespannung ausgebildet ist.

9. Kraftfahrzeug umfassend einen Hochvolt-Energiespeicher (10) nach einem der Ansprüche 6 bis 8 und/oder dazu ausgebildet ein Verfahren nach einem der Ansprüche 1 bis 5 durchzuführen.

## Claims

1. Method for operating a high-voltage energy storage device (10), which comprises a main control unit (12) and a plurality of interconnected battery cells (14), which are connected to the main control unit (12) by means of at least one line (16) and at least some of which is connected to a relevant cell monitoring device (18), which is, in each case, designed to detect at least one relevant cell parameter characterizing the state of the battery cell (14) and to transmit same to the main control unit (12) by means of a communication connection (20), the method comprising the steps of:
- detecting the communication between the main control unit (12) and the relevant cell monitoring device (18); **characterized by** the steps of:
- modulating a load, by at least one of the cell monitoring devices (18), of at least the battery cell (14) connected thereto in the event of a failure to transmit the cell parameter and/or a confirmation following transmission, so that a battery voltage is modulated, the modulation being carried out by switching on and off a balancing of the at least one battery cell (14) with at least one other battery cell (14) at a predetermined frequency;
- detecting the modulation by a voltage measurement of the main control unit (12) on the line (16); and
- specifying an operating state of the high-voltage energy storage device (10) by the main control unit (12) depending on the type of modulation.

2. Method according to claim 1,
**characterized in that**
the modulation takes place depending on the state of the battery cell (14) or the cell parameter.

3. Method according to any of the preceding claims,
**characterized in that**
a phase-locked loop is used to detect the modulation.

4. Method according to any of the preceding claims,
**characterized in that**
block adjustment is carried out during load modulation.

5. Method according to any of the preceding claims,
**characterized in that**
the operating state is specified as shutdown, operation without charging, unrestricted operation and/or operation with low discharge power.

6. High-voltage energy storage device (10), comprising a main control unit (12) and a plurality of interconnected battery cells (14), which are connected to the main control unit (12) by means of at least one line (16) and at least some of which is connected to a relevant cell monitoring device (18), which is, in each case, designed to detect at least one relevant cell parameter characterizing the state of the battery cell (14) and to transmit same to the main control unit (12) by means of a communication connection (20), wherein the high-voltage energy storage device (10) **is characterized in that** it is designed to carry out a method according to any of the preceding claims.

7. High-voltage energy storage device (10) according to claim 6, **characterized in that**
the high-voltage energy storage device (10) is designed as a traction battery for a motor vehicle.

8. High-voltage energy storage device (10) according to either claim 6 or claim 7,
**characterized in that**
a main control unit (12) has a lock-in amplifier which is designed to detect a modulation of a battery voltage.

9. Motor vehicle comprising a high-voltage energy storage device (10) according to any of claims 6 to 8 and/or designed to carry out a method according to any of claims 1 to 5.

## Revendications

1. Procédé permettant de faire fonctionner un accumulateur d'énergie haute tension (10) qui comprend un appareil de commande principal (12) et plusieurs cellules de batterie (14) montées les unes avec les autres, lesquelles sont connectées à l'appareil de commande principal (12) par l'intermédiaire d'au moins une ligne (16) et au moins une partie de celles-ci est connectée à un dispositif de surveillance de cellule (18) respectif qui est respectivement configuré pour détecter au moins un paramètre de cellule respectif caractérisant l'état de la cellule de batterie (14) et pour envoyer celui-ci à l'appareil de commande principal (12) par l'intermédiaire d'une connexion de communication (20), comportant les étapes consistant à :
- détecter la communication entre l'appareil de commande principal (12) et le dispositif de surveillance de cellule (18) respectif ; **caractérisé par** les étapes consistant à :
- moduler une charge par au moins l'un des dispositifs de surveillance de cellule (18) sur au moins la cellule de batterie (14) qui est connectée à celui-ci en l'absence d'envoi du paramètre de cellule et/ou d'un accusé de réception suivant l'envoi, de sorte qu'une tension de batterie est modulée, dans lequel la modulation est effectuée en activant et en désactivant un équilibrage de l'au moins une cellule de batterie (14) avec au moins une autre cellule de batterie (14) à une fréquence prédéfinie ;
- détecter la modulation par une mesure de tension de l'appareil de commande principal (12) sur la ligne (16) ; et
- prédéfinir un état de fonctionnement de l'accumulateur d'énergie haute tension (10) par l'appareil de commande principal (12) en fonction du type de modulation.

2. Procédé selon la revendication 1,
**caractérisé en ce que**
la modulation est effectuée en fonction de l'état de la cellule de batterie (14) ou du paramètre de cellule.

3. Procédé selon l'une des revendications précédentes,
**caractérisé en ce que**
une boucle à verrouillage de phase est utilisée lors de la détection de la modulation.

4. Procédé selon l'une des revendications précédentes,
**caractérisé en ce que**
un équilibrage de blocs est réalisé pendant la modulation de la charge.

5. Procédé selon l'une des revendications précédentes,
**caractérisé en ce que**
un arrêt, un fonctionnement sans charge, un fonctionnement sans restriction et/ou un fonctionnement avec une faible puissance de décharge sont définis comme état de fonctionnement.

6. Accumulateur d'énergie haute tension (10), présentant un appareil de commande principal (12) et plusieurs cellules de batterie (14) montées les unes avec les autres, lesquelles sont connectées à l'appareil de commande principal (12) par l'intermédiaire d'au moins une ligne (16) et au moins une partie de celles-ci est connectée à un dispositif de surveillance de cellule (18) respectif qui est respectivement configuré pour détecter au moins un paramètre de cellule respectif caractérisant l'état de la cellule de batterie (14) et pour envoyer celui-ci à l'appareil de commande principal (12) par l'intermédiaire d'une connexion de communication (20), dans lequel l'accumulateur d'énergie haute tension (10) est **caractérisé en ce qu'**il est configuré pour mettre en œuvre un procédé selon l'une des revendications précédentes.

7. Accumulateur d'énergie haute tension (10) selon la revendication 6,
**caractérisé en ce que**
l'accumulateur d'énergie haute tension (10) est configuré comme une batterie de traction pour un véhicule automobile.

8. Accumulateur haute tension (10) selon la revendication 6 ou 7,
**caractérisé en ce que**
un appareil de commande principal (12) présente un amplificateur à verrouillage configuré pour détecter une modulation d'une tension de batterie.

9. Véhicule automobile comprenant un accumulateur d'énergie haute tension (10) selon l'une des revendications 6 à 8 et/ou configuré pour mettre en œuvre un procédé selon l'une des revendications 1 à 5.
